# EUROPEAN PATENT APPLICATION

(11) **EP 4 683 156 A1**
(43) Date of publication of application: **21.01.2026**
(21) Application number: 24188655.5
(22) Date of filing: 15.07.2024
(51) Int. Cl.: H02J 7/00

(54) **METHOD, CONTROLLER, AND COMPUTER PROGRAM FOR OPERATING A POWER SUPPLY ARRANGEMENT, POWER SUPPLY ARRANGEMENT AND COMPUTER-READABLE MEDIUM**

(71) Applicant: ABB Schweiz AG, 5400 Baden (CH)
(72) Inventor: Burkard, Johannes, 8046 Zürich (CH); Engeli, Cornel, 8005 Zürich (CH)
(74) Representative: Sykora & König Patentanwälte PartG mbB

(57) **Abstract**

Method and controller for operating a power supply arrangement (20) and the power supply arrangement (20) having a first switch (22), a second switch (24), and a power source (30) electrically coupled in series for supplying energy to an external device. To interrupt the power supply to the external device the first switch (22) is opened sequentially before the second switch (24) and after opening the first switch (22) a measured parameter (I, V₁, E₁, V₂, E₂) is received based on which it is determined whether the first switch (22) is intact. When it is determined that the first switch (22) is not intact a safety measure is initiated.

## Description

### FIELD OF THE INVENTION

The invention relates to the field of power supply arrangements and their control. In particular, the invention relates to a power supply arrangement, a controller for operating the power supply arrangement, and to a method for operating the power supply arrangement.

### BACKGROUND OF THE INVENTION

To disconnect a power source, e.g., a battery pack, from an external device or interrupt the connection between the power source and the external device switches or contactors are commonly used. In the following, "switch" is used as a collective term for "switch" and "contactor". Further, the term "opening" a switch stand for "opening" and "breaking" a contactor or switch to interrupt an electrical coupling. Such switches are typically arranged in a series connection and opened synchronously to increase the overall interruption capability of the series connection of switches.

However, opening switches under load deteriorates their performance, in particular their capability of interrupting currents. After multiple opening operations under load, current interruption might fail when requested. Such ageing- or wear-related loss of opening/breaking capability, i.e., the capability to interrupt the electrical connection, could result in a safety risk. In particular, this might cause damage to the battery pack, attached infrastructure, or expose service personnel to additional risks.

A possibility to minimize contactor wear, i.e., a wear of the switch or switches, is to request the overhead system to ramp down a load current before opening the switches or pack switches. However, opening under load and hence switch wear cannot be avoided entirely.

Moreover, the status of the switches, in particular the wear of its contacts (contact wear), is unknown and a prediction of end-of-life of the switches is complex and often challenging. This, among other reasons, typically requires a superimposed switch to always disconnect safely. Such disconnection devices on a level superposed to the power source(s) serve as additional safety measures to interrupt as a precaution for the case that the switches have reached their limits and do not at least insufficiently interrupt the electrical connection to disconnect the power source from the external device. However, this increases design complexity and cost.

Alternatively, preventive maintenance of the switches or contactors has been proposed, however, this has the disadvantage of high effort and cost. Furthermore, online estimation of the remaining usable lifetime or modelling wear requires advanced algorithms and detailed characterization of switches or must be based on conservative assumptions.

### DESCRIPTION OF THE INVENTION

It is an objective of the present invention to provide a method, a controller, a computer program for operating a power supply arrangement, and a power supply arrangement, which contribute to a safe operation of the power supply arrangement and/or which may be realized in a simple and cost-efficient way. Further, it is an objective of the present invention to provide a computer-readable medium on which the computer program is stored.

These objectives are achieved by the subject-matter of the independent claims. Further exemplary embodiments are evident from the dependent claims and the following description.

The terms "first", "second" and "third" are used in this description for naming and differentiation purposes only. They are in no way intended to imply a chronological or spatial order or a quantity of the corresponding entities.

According to one aspect, the objective of the present invention is achieved by a method for operating a power supply arrangement, the power supply arrangement being configured for supplying energy to an external device. The power supply arrangement has a power source, a first switch, a second switch, and a terminal for coupling the power source to the external device. The first switch and the second switch are electrically coupled in series such that the power source is electrically coupled to the terminal via the first switch and the second switch when the first switch and the second switch are closed and such that the power source is not electrically coupled to the terminal when at least one of the first switch or the second switch is open. The method comprises transmitting a first opening signal to the first switch, wherein the first switch and the first opening signal are configured such that the first switch opens upon receipt of the first opening signal. The method further comprises receiving a first measured parameter after transmitting the first opening signal, determining from the first measured parameter whether the first switch is intact and initiating a safety measure when it is determined that the first switch is not intact. The method further comprises transmitting a second opening signal to the second switch after transmitting the first opening signal, wherein the second switch and the second opening signal are configured such that the second switch opens upon receipt of the second opening signal.

Thus, the first switch and the second switch are opened sequentially and not simultaneously. Thus, the first switch represents a dedicated switch that breaks more often under load than the second switch. Therefore, advantageously, the main wear and aging will happen at the first switch only and not at both switches (or any further switches opened after the first switch, if present). Further, to control the wear of the switches, only the first switch has to be monitored. Further advantageously, no superimposed switch is required and online wear monitoring, failure prediction and preventive maintenance can be omitted. Instead, a simple disconnection sequence is applied. In its basic realization, the method does not require a measurement-dependent opening sequence of the switches, which makes the proposed sequence very robust.

The power supply arrangement may comprise a controller for operating the power supply arrangement (in the following also referred to as "controller"). The method may be carried out by the controller. In particular, the controller may be configured for transmitting the opening signals and, in case any further signals are transmitted, for transmitting these further signals. The controller may further be configured for receiving the first measured parameter and, in case any other measured parameters are received, to receive these other measured parameters. The controller may further be configured to determine whether the first switch is intact.

The controller may be implemented by a memory for storing the measurement values and by a processor, in particular a microprocessor, carrying out the method based on the measurement values stored in the memory. The controller may be implemented by means of field programmable gate arrays (FGPAs). The controller may also be part of or be included in a battery management system (BMS), e.g. the BMS used in the battery, battery pack or battery string belonging to the switching system.

Before transmitting the first opening signal, a disconnection signal may be received by the controller, wherein the disconnection signal may indicate to disconnect the power supply from the external device or to interrupt the electrical coupling between the power source and the external device. The disconnection signal may be generated and sent to the controller by the external device or another external device. That one or more external devices are "external" may mean that they are not components of the power supply arrangement and of the controller.

The controller may open the second switch after a predetermined time delay after the first switch has been opened. For example, the time delay may be between 0.01 s and 1 s, in particular, between 0.02 and 0.1 s. For example, the delay may be 0.05 s. The delay may be chosen such that it is longer than the normal current interruption time of the first switch but shorter than the time in which the first switch would experience massive damage if interruption was not successful.

The controller may perform a transient detection. In general, in the transient detection the first measured parameter is measured and optionally received by the controller after the first switch has been opened and before the second switch, or in case of *N*>2 switches, before the last of the *N* switches, is opened. Further, in general, in or after the transient detection, it may be determined whether the first switch is intact based on the first measured parameter . Alternatively, the controller may perform a post-disconnection detection. In general, in the post-disconnection detection a second measured parameter is measured and/or received after the first switch and the second switch, or in case of *N>2* switches, after the last of the *N* switches, have/has been opened. Further, in general, in the post-disconnection detection based on the second measured parameter, it may be determined whether the first switch is intact after measuring and/or receiving the second measured parameter, i.e. after the first switch and the second switch, or in case of *N>2* switches, after the last of the *N* switches, have/has been opened. In general, receiving may include a case in which a measuring unit transmits one or more of the measured parameters to the controller actively, e.g., directly after measuring it, or passively, e.g., after receiving a request from the controller to provide the measured parameter. Further, the controller may initiate the measurement of the corresponding parameter to receive it.

The transmitting of the second opening signal, i.e., the opening of the second switch, may happen after measuring the first parameter. In particular, transmitting of the second opening signal may happen before, simultaneously with or after receiving the first measured parameter and/or determining whether the first switch is intact.

The first measured parameter may be a first switch voltage measured over the first switch, a switch voltage that is measured over the first switch and the second switch, or, if further switches are present, a switch voltage that is measured over a subset of these switches or all switches. Further, the first switch voltage may be a switch voltage measured over the terminal, e.g. the contactors or poles of the terminal, which may effectively correspond to a switch voltage measured over all switches and the battery and any other components that may be connected between the connectors/poles of the terminal. Over the course of time, the first switch voltage, or any other measured switch voltage measured over the second or any further switch or the terminal, may comprise one or more switch voltage drops.

Alternatively, the first measured parameter may be a current flowing through the first switch or an energy measured at the first switch, for example a switch arc energy.

Further alternatively, the first measured parameter may be a temperature measurable at the first switch. The switch arc energy may lead to a local heating of the contacts of the switch and the switch itself. Thus, an increase in temperature at a switch (especially a rapid increase) may indicate a high switch arc energy and/or a long-lasting presence of switch arc energy. This in turn may indicate that the corresponding switch is no longer intact.

Further alternatively, the first measured parameter may be a parameter measurable at the first switch that indicates a formation of ions, e.g., a count of ions measured by a ionometer. These ions may be captured within the power supply arrangement and may indicate a gas formed because of the first switch not being intact. The gas may come from a burn-off material or from a ionized gas of the first switch, in case of the first switch being filled with the gas.

Further alternatively, the first measured parameter may be a number of events detected at the first switch. For example, the counted number may be a number dependent on a plurality of conditions. For example, the counted number may indicate how often the current measured at the first switch, the switch voltage measured over the first switch or the energy measured at the first switch has exceeded or fallen below a setpoint, threshold or limit value. For example, the controller may determine that the first switch is no longer functioning properly if the counted number exceeds a threshold number of times. For example, the counted number indicates that the measured current has exceeded a predetermined current threshold more than a predetermined number of times.

The controller may compare the first measured parameter with a setpoint, threshold or limit value to determine the proper functioning of the first switch. For example, the controller may be configured in such a way that it determines that the first switch is no longer functioning properly when the value reaches ("="), falls below ("≤" or "<") or exceeds (">" or "≥") a setpoint, threshold or limit value. The setpoint, threshold or limit value may, for example, be predetermined or determined dynamically during operation (online). The measured parameter may also indicate the presence of a material (e.g. a burn-off material) or gas (e.g. ionised air or ionised gas). In these examples, the first measured parameter may be used to determine whether, for example, burn-off material or ionised air/ionised gas is present and from its presence it is concluded that combustion has occurred in the first switch and that it is no longer functioning properly.

The safety measure may be initiated before or after transmitting the second opening signal. The safety measure may involve providing and possibly sending a warning that the first switch is not intact, i.e., not functioning properly. The warning may include a notification that maintenance action needs to be taken, e.g., the first switch needs to be replaced. Alternatively or additionally, the safety measure may include blocking or limiting the operation of the switch or switches or the power supply arrangement.

When it is determined that the first switch is intact, no safety measure has to be initiated. In any case, the second opening signal is transmitted, i.e., the second switch is opened in addition to the first switch.

According to an embodiment, the method further comprises receiving the second measured parameter and determining based on this second parameter whether the first switch is intact after transmitting the second opening signal to the second switch.

Advantageously, this provides an additional check to increase the reliability of the determining whether the first switch is intact or not. The second measured parameter therefore may represent a further checking or safety measure that is intended to check or ensure the proper functioning or intactness of the first switch.

In particular, the second measured parameter may be measured while or after the second switch is/has been opened. Further, in case of *N*>2 switches, the second measured parameter may be measured while or after any or all of the 2-*N* switches are/have been opened. In other words, the controller performs a post-disconnection detection to measure the second measured parameter.

The measuring units for measuring the first and second measured parameter may be the same measuring unit or separate units.

The measuring unit that measures the second parameter may use feedback contacts present on the first switch to check whether it is functioning properly. The feedback contacts are configured to check whether the contacts of the first switch are opened or closed and to send a corresponding feedback signal to the controller. If the feedback contacts indicate closed main contacts of the first switch after the first switch received the first opening signal, it is assumed that the first switch is no longer intact, e.g., because the main contacts have been welded together during opening the switch.

The second measured parameter may be one of the parameters already mentioned and discussed in connection with the first measured parameter. In one example, the second measured parameter may be a different parameter than the first parameter. For example, the first measured parameter may be a current flowing through the first switch and the second measured parameter may be a switch voltage measured over the first switch or vice versa, wherein the second measured parameter may also be the switch arc energy or wherein the first and/or second measured parameters may also be the information contained in the feedback signal. In another example, first and second measured parameters may be the same measured parameter, e.g. the current or the switch voltage, whereby, for example, the measurement of the second parameter provides a double-check of the first measured parameter.

According to an embodiment, the method further comprises receiving a third measured parameter and determining based on it whether the first switch is intact before transmitting the first opening signal to the first switch, e.g., while or after the first switch is closed after having been opened at an earlier point in time. Thus, the controller performs a pre-disconnection detection to measure the third measured parameter, wherein in a pre-disconnection detection in general the third measured parameter is received and/or measured while or after the first switch is closed after having been opened at an earlier point in time.

Advantageously, this provides an additional check to increase the reliability of the determining whether the first switch is intact or not. The third measured parameter therefore may represent a further checking or safety measure that is intended to check or ensure the proper functioning or intactness of the first switch.

The controller may perform a pre-disconnection detection by receiving the third measured parameter by means of a third measuring unit before the electrically conductive contact is opened and determining, which includes determining and/or estimating, whether the first switch is intact. For example, to perform the pre-disconnection detection, the third parameter may be measured while or after the first switch is closed again, after having been opened at an earlier point in time. The third measured parameter may be, e.g., a contact resistance that could be detected via current or switch voltage measurement, wherein an increased contact resistance may indicate residue of burnt material, which may be an indicator of a non-intact first switch. In a further example, the measurement of the third parameter may be carried out by measuring a number of ions within the power supply arrangement. In case of any burn-off material being present around the first switch or a faulty gas-filled first switch the number of gas-ions within the power supply arrangement may exceed a predefined threshold and thereby enable the pre-detection of the non-intact first switch. Alternatively, the third measured parameter may be the same as the first or second measured parameter and may be measured to verify the other measurement of the first and/or second parameter. In this case, the third measured parameter may have been recorded and stored by the third measuring unit at an earlier point in time, e.g. while or after the last time that the first switch has been closed, after having been opened at an earlier point in time. In this case, the controller may access the third measured parameter before the first switch is opened again and use it to determine whether the first switch is intact or not. For example, if the third measured parameter is a switch arc energy, the third measured parameter may have to be measured while the first switch is closing after having been opened at an earlier point in time, because an arc occurs only while closing or opening a switch and consequently an arc energy may be measurable only during the opening or closing process of the switch. Further, for example, if the third parameter is or corresponds to a number of ions or is a temperature, the third measured parameter may be measured after the first switch has been closed after having been opened at an earlier point in time, because the number of ions or a temperature increases during the closing (or opening) process of a switch due to the occurrence of an arc and, thus, reaches its maximum at the end or shortly after the closing (or opening) process.

Further, the third measured parameter may be any of the measured parameters already discussed in connection with the first and second measured parameters. In particular, if the third parameter is a counted number of events, the controller may determine that the first switch is not intact or may no longer be functioning properly if the counted number exceeds a threshold number of times. For example, a measured current, switch voltage or switch arc energy has exceeded a predetermined current threshold more than a certain threshold number of times. This counted number, may, e.g., be determined before or after the first switch is closed after having been opened at an earlier point in time and may be stored until it is used to estimate or determine whether the first switch is intact before opening the first switch.

According to an embodiment, the method is adapted for operating the power supply arrangement that comprises one or more further switches, wherein the one or more further switches are electrically coupled in series with the first switch, the second switch and the power source. The power source is further electrically coupled to the terminal via the one or more further switches when the first switch, the second switch and the one or more further switches are closed and wherein the power source is not electrically coupled to the terminal when at least one of the first switch, the second switch or one of the one or more further switches is open. In this embodiment, the method further comprises, simultaneously with or time-delayed after transmitting the second opening signal, transmitting a respective further opening signal to each of the one or more further switches, wherein the one or more further switches and the respective further opening signals are configured such that each of the one or more further switches opens upon receipt of the respective further opening signal.

Advantageously, this increases the overall opening/breaking capability of the second and further switches.

For example, further switches 2 *to N* may be present in addition to the first switch, all of which are connected in series with each other and with the first switch, where *N* is a natural number. The second switch may in this case be included in the *2 to N* switches. The first switch may always be opened before the switches *2 to N,* i.e., the second switch and the further switches, to break the electrically conductive contact. Thus, the first and the *2 to N* switches may be opened sequentially.

The second and any present further switches, may be opened following a particular opening sequence. The opening sequence may specify the order in which the switches are opened. The opening sequence may alternatively or additionally specify delay times to be waited between the opening of the switches. The opening sequence may, for example, be dependent on a condition to be checked in the pre-disconnection or the transitory detection.

The first, second and third measured parameter may be measured at the same switch or at different switches. E.g., all three parameters may be measured at the same switch, or one parameter at one switch, e.g., the first switch, and the other two at a same other switch, e.g., the second switch. Or, each parameter may be measured at a different switch (in case there are at least three switches).
Thus, the first measured parameter may be measured at/over the first switch or at/over the second switch, or, in case of *N>2* switches, at/over any or all of the *N* switches. Further, the second measured parameter may be measured at/over the first switch or at/over the second switch, or, in case of *N>2* switches, at/over any or all of the *N* switches. Further, the third measured parameter may be measured at/over the first switch or at/over the second switch, or, in case of *N*>2 switches, at/over any or all of the *N* switches. In one example, at least one of the first, second and third measured parameter may be measured at the connectors or poles of the terminal. For example, the first, second, and/or third measured parameter may be a switch a current or switch arc energy measured at the first, second, ..., or *N*th switch, or at a subset or all of the *N* switches. Further, for example, the first, second, and/or third measured parameter may be a switch voltage measured over the first switch, or over a subset of the *N* switches containing the first switch, over all *N* switches. Further, for example, the first, second, and/or third measured parameter may be a current or switch arc energy measured at, or a switch voltage measured over the terminal, e.g., the connectors or poles of the terminal.

Regardless of whether there are further switches in addition to the first and second switches, the opening sequence may provide that the second and any further switches never open under load unless the first switch is not intact, e.g., does not open or does not open properly.

According to an embodiment, the safety measure comprises at least one of limiting or blocking the operation of the first switch, the second switch and any present further switches, and/or the power supply arrangement.

Advantageously, this helps to avoid operating the power supply arrangement while the first switch is not intact and represents a possible risk.

For example, the second switch and any present further switches may be opened under load and, hence, the power source be decoupled from the external device. Any further intent to close the first, second and any further switches might be blocked to avoid operating the system with a non-intact, e.g., malfunctioning first switch. E.g., any further connection requests, e.g. from the controller, may be ignored, rejected or prohibited. Thus, in a scenario in which the first switch may be not intact but, may nevertheless be closed, this would provide the risk of running the system without a reliably functioning first switch. Therefore, the above safety measure avoids such a scenario. Alternatively, the operation of the entire system, e.g., the power supply arrangement may be limited, e.g., to only run with reduced power or load. For example, corresponding operating or protection thresholds may be reduced to a degree where a disconnection via only the second (or more) switch(es) still can be safely guaranteed even though the second (or more) switch(es) has (have) been exposed to an increased degree of wear.

According to a further aspect, a controller for operating the power supply arrangement is provided. The power supply arrangement is configured for supplying energy to the external device and having the power source, the first switch, the second switch, and the terminal for coupling the power source to the external device. The first switch and the second switch are electrically coupled in series such that the power source is electrically coupled to the terminal via the first switch and the second switch when the first switch and the second switch are closed and such that the power source is not electrically coupled to the terminal when at least one of the first switch or the second switch is open. The controller comprises a memory for storing one or more measurement values, and a processor communicatively coupled with the memory and being configured to carry out the method according to one of the preceding aspect or embodiments based on the one or more measurement values stored in the memory.

The controller may carry out the method by software, in particular a computer program, stored in the memory or by hardware, e.g., a hard-wired circuit of the controller, e.g., the processor or the FPGA, or on a combination of software and hardware.

Advantageously, the controller can be combined with different types of power sources, power supply arrangements and external devices.

At least one of the one or more measuring units may be a voltage measuring device, such as a voltmeter, and the measured parameter may be a switch voltage measurable over the first switch. In some examples, the measured parameter is a switch voltage that is measurable over the first switch and the second switch, or, if further switches are present, a switch voltage that is measurable over a subset of these switches or all switches.

Alternatively or additionally, at least one of the one or more measuring units may be a current measuring device, such as an amperemeter, and the first measured parameter may be a measurable current flowing through the first switch.

Alternatively or additionally, at least one of the one or more measuring units may be an energy measuring device, e.g. a wattmeter, and the first measured parameter may be an energy measurable at the first switch, for example the switch arc energy.

Alternatively or additionally, at least one of the one or more measuring units may be a temperature measuring device, e.g., a thermometer, and the first measured parameter may be a temperature measurable at the first switch.

Alternatively or additionally, at least one of the one or more measuring units may be an ion measuring device, e.g., an ionometer, and the first measured parameter may be a parameter measurable at the first switch that indicates a formation of ions, e.g. be a count of ions.

Alternatively or additionally, at least one of the one or more measuring units may be a counting device and the first measured parameter may be a number of events detected at the first switch. In some embodiments, the counted number may be a number dependent on a plurality of conditions. For example, the first measuring unit can count how often a current measured at the first switch, a switch voltage measured over the first switch, or an energy measured at the first switch has exceeded or fallen below a setpoint, threshold or limit value. In some embodiments, for example, the controller determines that the first switch is no longer intact if the counted number exceeds a threshold number of times, for example, a measured current has exceeded a predetermined current threshold more than a certain threshold number of times.

In particular, the one or more measuring units may use, or measure feedback contacts present on the first switch. Based on the state of these feedback contacts the controller may determine whether it is intact. For example if the feedback contacts indicate closed main contacts of the first switch, it can be assumed that the first switch is no longer intact, e.g. because the main contacts have been welded together while opening the first switch.

The one or more measuring units may be structurally separate units or functionally separate units that are contained in one or more structural units. Thus, the one or more measuring units may be the same measuring unit or separate units. For example, it may be one measuring unit have the functionalities to measure several different parameters, e.g., switch voltage, current, resistance, energy, temperature, ionization etc. There may also be several measuring units, each of which measures a different parameter, or each of which measures the same parameter, e.g. a switch voltage. Alternatively, a first measuring unit or a first group of the measuring units may measure one or more parameters, e.g. switch voltage, or switch voltage and current, and a second measuring unit or a second group of the measuring units may measure one or more different parameters, e.g. temperature, or temperature and number of ions.

For example, there may be two measuring units. A first measuring unit that is configured to measure the earlier discussed first parameter, and a second measuring unit that is configured to measure the earlier discussed second parameter. The second measuring unit may, e.g., be used to additionally check the functionality of the first switch. It therefore represents a further checking or safety measure that is intended to check or ensure the proper functioning or intactness of the first switch. However, the first and the second measuring units may be structurally identical (same device) and/or functionally identical (same parameter). For example, the second measuring unit may measure a measured parameter that was not measured by the first measuring unit. For example, the first measuring unit may measure a current flowing through the first switch and the second measuring unit may measure a switch voltage applied to the first switch or vice versa. Alternatively, the first and second measuring units may measure the same measured parameter, whereby, for example, the measurement of the first measuring unit checks the measurement of the second measuring unit.

Alternatively or additionally, to the second measuring unit there may be a third measuring unit that measures the earlier discussed third measured parameter.

According to a further aspect a power supply arrangement configured for supplying energy to an external device is provided. The power supply arrangement comprises the power source, the terminal for electrically coupling the power source to the external device, the first switch electrically coupled in series with the power source and being configured for opening upon receipt of the first opening signal, the second switch electrically coupled in series with the first switch and the power source and being configured for opening upon receipt of the second opening signal. The power supply arrangement further comprises the one or more measuring units for measuring parameters, and the controller configured to communicate with the first switch, the second switch and the one or more measuring units. The power source is electrically coupled to the terminal via the first switch and the second switch when the first switch and the second switch are closed and the power source is not electrically coupled to the terminal when at least one of the first switch or the second switch is open.

Advantageously, such a power supply arrangement may provide components that are adapted to each other.

As mentioned earlier, the first and second switches may each be a contactor.

The power source may comprise one or more power sources, in particular batteries or battery modules. For example, the first and second switches can be connected in series with a string of a battery pack. The battery pack(s) can be e.g. lithium-ion battery pack products, especially in the power range of 25-500 kW. However, the power supply arrangement may comprise any other kind of source for energy, power, or current.

According to an embodiment, the first switch is a different type of switch than the second switch.

For example, the first switch may use a different switch technology than the second switch. This may advantageously provide a higher robustness, because two different technologies are combined.

According to an embodiment, the first switch is an open or air-filled switch and the second switch is a sealed or gas-filled switch.

Advantageously this combines the properties of an air-filled/open switch with those of a gas-filled/sealed switch. The relatively slow arc voltage build-up and the open arc chamber of the first switch may allow the second switch (and potential further switches) to support an otherwise failing interruption process of the first switch. Major damage of the first switch, in particular explosion may be avoided with this technology. This is because a switch with an open arc chamber can maintain an internal arc without explosion for a much longer time than a gas-filled switch of comparable size if current interruption is not successful. In addition, the high breaking capability of the gas-filled second switch (and potential further switches) may allow to realize a high maximum breaking capability at a compact volume. The total interruptible current range may be increased compared a realization with only switches with open arc chambers. The risk for explosion of a failing switch at end-of-life may be greatly reduced in comparison to using a gas-filled switch as first switch. The risk of systematic component failures may, thus, be decreased by applying two different technologies.

According to an embodiment, the first switch and the second switch are arranged between a first pole and a second pole of the terminal in such a way that, in a direction of a current flowing from the first pole to the second pole, the power source is coupled between the first switch and the second switch.

For example, in the electrical circuit and in the direction of a current flowing from the first pole to the second pole, the power source may be arranged between, on the one hand, the first switch and, on the other hand, the second switch. For example, there may be one switch at the plus pole of the power source and one switch at the minus pole of the power source.

According to an embodiment, the first switch and the second switch are arranged between a first pole and a second pole of the terminal in such a way that, in a direction of a current flowing from the first pole to the second pole, the power source is coupled before or after the two switches.

For example, the power source, the first switch and the second switch may be arranged sequentially in an electrical circuit connecting a first pole and a second pole of the terminal. In the sequence or series of switches and in the direction of a current flowing from the first pole to the second pole, the first switch may be arranged before the second switch. Alternatively, the first switch may be arranged after the second switch. In any case, the power source is either arranged before or after the first and second switch. For example, both switches may be at the plus pole of the power source and both switches may be at the minus pole of the power source.

According to an embodiment, the power supply arrangement further comprises the one or more further switches, wherein the one or more further switches are electrically coupled in series with the first switch, the second switch and the power source, wherein the power source is further electrically coupled to the terminal via the one or more further switches when the first switch, the second switch and the one or more further switches are closed and wherein the power source is not electrically coupled to the terminal when at least one of the first switch, the second switch or one of the one or more further switches is open. In this embodiment, the controller is configured to transmit a respective further opening signal to each of the one or more further switches, wherein the one or more further switches and the respective further opening signals are configured such that each of the one or more further switches opens upon receipt of the respective further opening signal, wherein the respective further opening signals are transmitted simultaneously with or time-delayed after transmitting the second opening signal.

For example, the further switches 2-*N* may be present in addition to the first switch and may include the second switch. All further switches are connected in series with each other and with the first switch. The second switch may, e.g., be the first or the last switch in the series of the further switches 2-N.

The power source, the first switch and further switches may be arranged sequentially in an electrical circuit connecting a first pole and a second pole of the terminal. In the sequence of switches of the series connection and in the direction of a current flowing from the first pole to the second pole, the first switch may be arranged before the second switch and the second switch may be arranged before the further switches. Alternatively, the first switch may be arranged before the further switches and the further switches may be arranged before the second switch.

Further, in the electrical circuit and in the direction of a current flowing from the first pole to the second pole, the power source may be arranged between, on the one hand, the first switch and, on the other hand, the second and the further switches.

Alternatively, the further switches may be arranged in the electrical circuit and in the direction of a current flowing from the first pole to the second pole, such that the power source is connected between, on the one hand, the first switch, the second switch and, optionally, a first portion of the further switches and, on the other hand a second, remaining portion of the further switches. This may include the case in which the first portion of the further switches is empty and the second portion of further switches consists of all further switches.

The switches 2-*N* may be switches of a different type than the first switch. Also, alternatively or additionally, some of the switches 2-N may be different types of switches, e.g. each of the switches 2-*N* may be a different type of switch, or some of these further switches may be of one type and others may be of one or more other types. What has been discussed with respect to mixing switches of different types applies here as well.

Further, what has been discussed with respect to opening the second and any further switches according to the earlier discussed opening sequence applies here as well.

According to a further aspect a computer program product is provided comprising instructions to cause the controller described above to execute the method of any of the earlier described aspect and embodiments.

According to a further aspect a computer-readable medium is provided having stored thereon the computer program of the above aspect. The computer-readable medium may be a floppy disk, a hard disk, an USB (Universal Serial Bus) storage device, a RAM (Random Access Memory), a ROM (Read Only Memory), an EPROM (Erasable Programmable Read Only Memory), an EEPROM (Electrical Erasable Programmable Read Only Memory) or a FLASH memory. The computer readable medium may also be a data communication network, e.g. the Internet, which allows downloading a program code. In general, the computer-readable medium may be a non-transitory or transitory medium.

### BRIEF DESCRIPTION OF THE DRAWINGS

The subject matter of the invention will be explained in more detail in the following text with reference to exemplary embodiments which are illustrated in the attached drawings.
- Fig. 1: shows a block diagram of a first example of a power supply arrangement according to an embodiment of the invention;
- Fig. 2: shows a block diagram of a second example of a power supply arrangement according to an embodiment of the invention;
- Fig. 3: shows flowchart of a method according to an embodiment of the invention;
- Fig. 4: shows examples of measured parameters for a case of an intact first switch;
- Fig. 5: shows the examples of the measured parameters of Fig. 4 for a case of a non-intact first switch.

The reference symbols used in the drawings, and their meanings, are listed in summary form in the list of reference symbols. In principle, identical parts are provided with the same reference symbols in the figures.

### DETAILED DESCRIPTION OF EXEMPLARY EMBODIMENTS

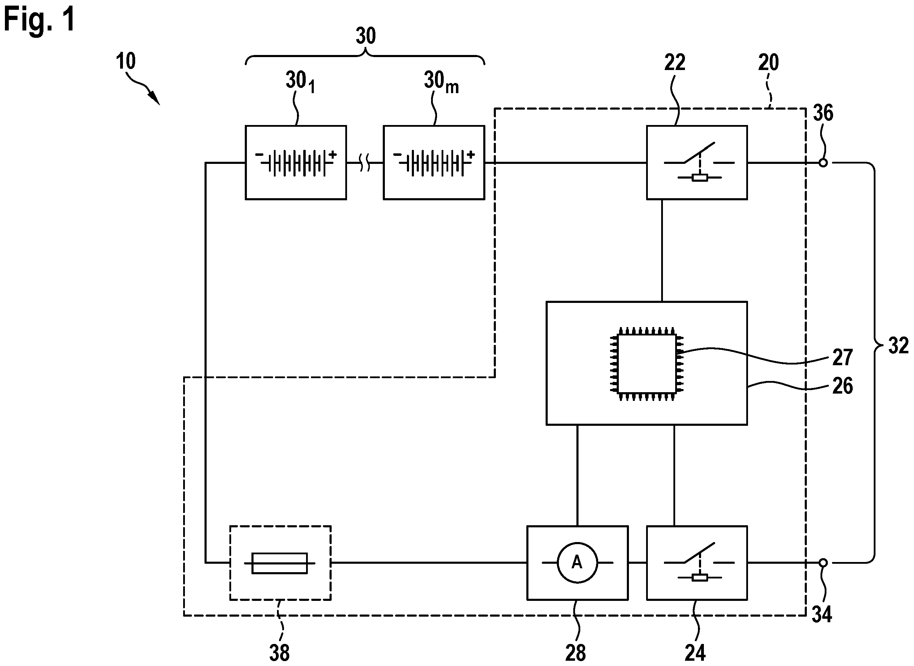

Fig. 1 shows a block diagram of a first example of a power supply arrangement 10 according to an embodiment of the invention. The power supply arrangement 10 comprises a switch system 20. The switch system 20 has a first switch 22 and a second switch 24 which are electrically coupled in series. The switch system 20 further has an amperemeter 28 which serves as a first measuring unit for measuring a current flowing through the electrical circuit in which the first switch 22 is arranged. The amperemeter 28 may serve as a second and or as an optional third measuring unit, that measures a second and an optional third parameter, respectively. Alternatively, a separate second measuring unit (not shown) for measuring a second parameter and, optionally, a separate third measuring unit (not shown) for measuring a third parameter may be included by the switch system 20. Further, the switch system 20 has a controller 26 for operating the power supply arrangement 10 by a processor 27. The controller 26 is configured to communicate with the first switch 22, the second switch 24 and one or more measuring units, such as the amperemeter 28. The controller 26 may be a component of or may embody a Battery Management System (BMS) of the power supply arrangement. The first switch 22, the second switch 24 and the amperemeter 28 communicate with the controller 26 such that signals and/or measured parameters may be exchanged with the controller 26, in particular, the controller 26 may transmit signals, in particular opening signals, to the first switch 22 and the second switch 24 and receive measured parameters from the amperemeter 28. Optionally, the switch system 20 may comprise a fuse 38.

The power supply arrangement 10 further comprises a battery string 30 comprising several battery modules 30₁ to 30ₘ. The battery string 30 serves as a power source of the power supply arrangement 10 and is electrically coupled in series with the first switch 22 and the second switch 24 such that it is arranged between the first switch 22 and the second switch 24 in a direction of a current flowing from a first pole 34 to a second pole 36 of a direct current (DC) terminal 32. Via the DC terminal 32 the power source 30 can be electrically coupled with an external device (not shown).

The controller 26 may send a first opening signal to the first switch 22, e.g., in response to receiving a command to interrupt the electrical coupling of the battery string 30 and the external device. Upon receipt of the first opening signal the first switch 22 opens such that it interrupts the electrical circuit in which it is arranged together with the second switch 24 and the battery string 30. The amperemeter 28 may then measure the current flowing through the electrical circuit. The controller 26 may then receive the measured current and determine, based on the value, whether the first switch 22 is intact.

After sending the first opening signal to the first switch 22, the controller 26 may send a second opening signal to the second switch 24. On receiving the second opening signal, the second switch 24 opens, i.e. interrupt the electrical circuit so that no current can flow through it. The transmission of the second opening signal may take place before, simultaneously with or after the measurement of the current. In particular, the transmission of the second opening signal may occur before, simultaneously with or after receiving the measured current and determining whether the first switch 22 is intact. Thus, if the first switch 22 opens and is intact, the second switch 24 opens without load, thereby reducing any wear due to opening under load. The wear or health of the first switch 22 is checked by measuring the current through the amperemeter 28 immediately after opening the first switch 22. Thus, the wear of the first switch 22 can be controlled or determined or estimated without the need for wear models or preventive maintenance.

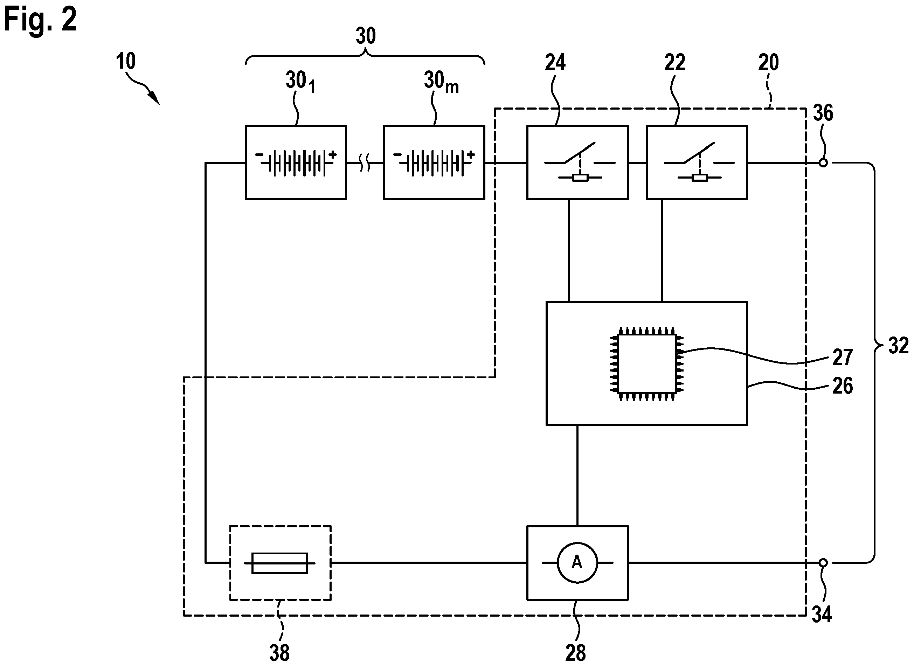

Fig. 2 shows a block diagram of a second example of a power supply arrangement 10 according to an embodiment of the invention. The power supply arrangement of Fig. 2 differs from that illustrated in Fig. 1 only in that the battery string 30 is electrically coupled in series with the first switch 22 and the second switch 24 such that it is arranged before the first switch 22 and the second switch 24 in a direction of a current flowing from the first pole 34 to the second pole 36 of the DC terminal 32.

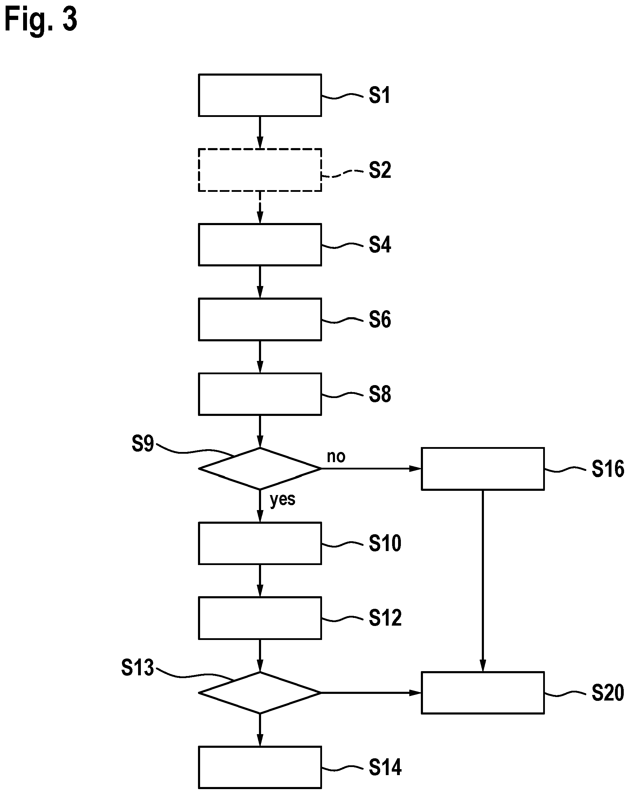

Fig. 3 shows flowchart of a method according to an embodiment of the invention. The method may be performed by the controller 26 explained above.

In a step S 1, an instruction to start a disconnection of a power source, e.g., the power source 30, from an external device may be received. Such an external device can be, for example, an electric motor or other appliance.

In an optional step S2, a pre-detection whether the first switch 22 is intact or not may be carried out. Everything that has been discussed earlier with respect to when and where the third measured parameter may be measured and what the third measured parameter may be applies here as well. For example, as discussed earlier, the pre-detection may be carried out by measuring a number of ions within the power supply arrangement 20. In case of any burn-off material being present around the first switch 22 or a faulty gas-filled first switch 22 the number of gas-ions within the power supply arrangement may exceed a predefined threshold and thereby enable the pre-detection of the faulty first switch 22. Also, as discussed earlier, an increased contact resistance may be measurable, e.g., via a current measurement at or a voltage measurement over the first switch. Alternatively, as also discussed earlier, the third measured parameter may correspond to the first or second measured parameter and may be measured to verify the other measurement of the first and/or second parameter. In this case the third measured parameter may have been recorded and stored by the third measuring unit at an earlier point in time, e.g. while or after the last time that the first switch 22 has been closed, after having been opened at an earlier point in time. In this particular case, the controller 26 may access the third measured parameter before the first switch 22 is opened again and use it to determine whether the first switch 22 is intact or not. The method may proceed in step S4 independent thereof whether the first switch 22 is determined as being intact or not in step S2 and the result of step S2 may only be used in order to verify one or more of the following detection principles. For example, below, in step S9 the result of step S2 may be used in combination with the result of step S8 in order to determine whether the first switch is intact or not.

In a step S4, a controller, e.g., the controller 26, may transmit a first opening signal to a first switch, e.g., the first switch 22. The first opening signal may be configured such that the first switch 22 opens upon receipt of the first opening signal.

In a step S6, the method may be paused for a temporal delay *t_{delay}.* The delay may be chosen such that it is longer than the normal current interruption time of the first switch 22 but shorter than the time in which the first switch 22 would experience massive damage if interruption was not successful.

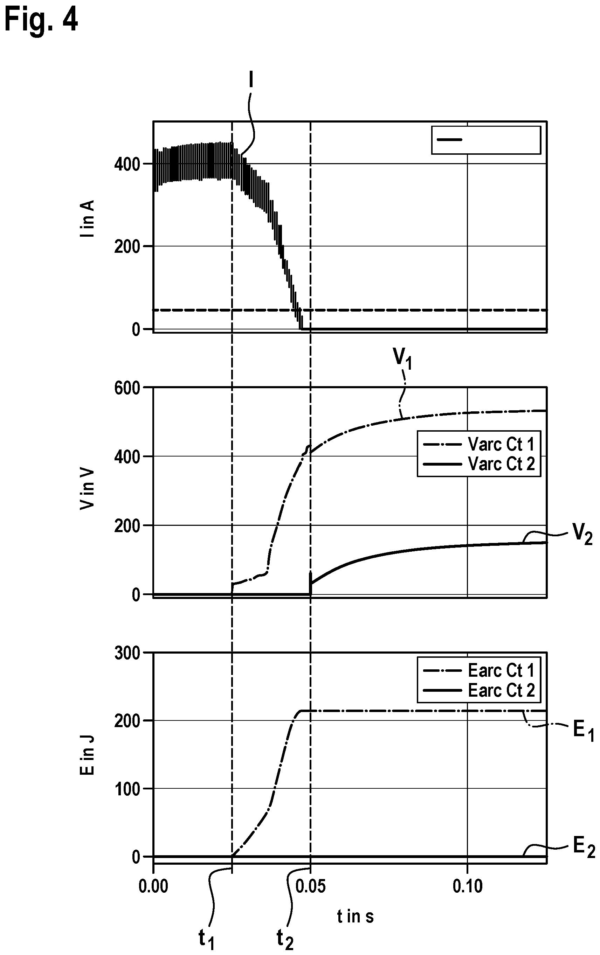

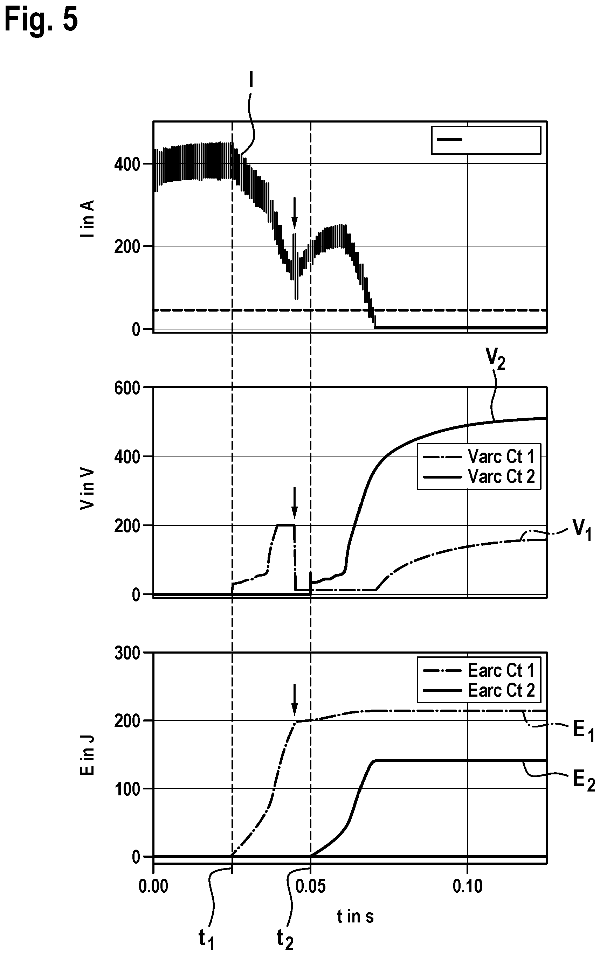

In a step S8, a first measured parameter I, V₁, V₂, E₂ (see figures 4 and 5) may be received. Everything that has been discussed earlier with respect to when and where the first measured parameter may be measured and what the first measured parameter may be applies here as well.

In a step S9 it may be determined that the first switch 22 is intact or not based on the received first measured parameter I, V₁, V₂, E₂. For example, the first switch 22 may be determined as being intact when the first measured parameter I, V₁, V₂, E₂ is below or above a predefined threshold value, depending on which parameter was chosen as the first measured parameter I, V₁, V₂, E₂ and depending on the predefined threshold, as explained below with respect to figures 4 and 5. If the first switch 22 is determined as being intact, the method proceeds in a step S 10. If the first switch 22 is determined as not being intact, the method proceeds in a step S16.

In step S10, one or more further opening signals may be transmitted to one or more further switches 2-N, in particular to the second switch 24, such that the *2-N* further switches 24 open. Each of the one or more further opening signals may correspond to one of the one or more further switches 24 and the one or more further switches 24 and the one or more further opening signals may be configured such that each of the one or more further switches 24 opens upon receipt the opening signal corresponding to it.

In a step S12, a second measured parameter I, V₁, V₂, E₂ may be received. Everything that has been discussed earlier with respect to when and where the second measured parameter may be measured and what the second measured parameter may be applies here as well. The second measured parameter may be representative of a status of feedback contacts of the first switch 22. The status of the feedback contacts may indicate whether the contacts of the first switch 22 are connected (although the first switch 22 has been opened such that the contacts should not be connected). A connection of the contacts despite transmitting the first opening signal to the first switch 22 may result from the contacts being welded together by the opening arc that occurs during opening the first switch 22. However, other of the earlier discussed parameters may be measured and employed for determining whether the first switch 22 is intact.

In a step S13, it may be determined whether the first switch 22 is intact or not, e.g., based on the second measured parameter I, V₁, V₂, E₂. For example, the first switch 22 may be determined as being intact when the second measured parameter I, V₁, V₂, E₂ is below or above a predefined threshold value, depending on which parameter was chosen as the second measured parameter I, V₁, V₂, E₂ and depending on the predefined threshold, as explained below. Alternatively, a wear or aging, e.g., in form of a current life time and/or remaining life time, of the first switch 22 may be determined, e.g. via a parameter in from of a counter or of an arc energy integrator. The first switch 22 may be determined as being intact when the current life-time is shorter than a predefined life-time or the remaining life time is longer that a predefined remaining life time of the first switch 22. The first switch 22 may be determined as not being intact when the current life-time is longer than the predefined life-time or the remaining life time is shorter that a predefined remaining life time of the first switch 22. In the latter case, the first switch 22 may have reached the end of its life (end-of-life detection). If the first switch 22 is determined as being intact, the method may proceed in a step S14. If the first switch 22 is determined as not being intact, the method may proceed in a step S20.

In step S14, the method may be terminated with the electrical coupling between the power source 30 and the external device being interrupted, and no further measures may be taken.

In step S16, the one or more further opening signals may be transmitted as well. Thus, in both cases determined in step S9, i.e., the first switch being intact or not intact, the one or more further switches 24 may receive the corresponding opening signals. Thus, in any of the two possible cases, the *2-N* further switches 24 may be opened to interrupt the electrical coupling between the power source 30 and the external device.

In a step S20, a safety measure may be initiated. So, the safety measure may be initiated when determining that the first switch is not intact in step S9 or in step S13. Thus, whenever it is determined in steps S9 or S13 that the first switch 22 is not intact, the safety measure is initiated. For example, the safety measure may include blocking or limiting any further operation of the first switch 22 or of the power supply arrangement 20.

Fig. 4 shows examples of the measured parameters I, V₁, E₁ for the case of the first switch 22 being intact. The top graph in Fig. 4 shows the progression of the measured current I over time measured between the first pole 34 and the second pole 36. The middle graph in Fig. 4 shows the progression over time of a first switch voltage V₁ measured over the first switch 22 and the progression over time of a second switch voltage V₂ measured over the second switch 24. The lower graph in Fig. 4 shows the progression over time of a first switch arc energy E₁ measured at the first switch 22 and the progression over time of a second switch arc energy E₂ measured at the second switch 24. The vertical dashed lines mark two points in time t₁ and t₂. At time t₁, the first opening signal is transmitted to the first switch 22, and it opens; at time t₂, the second opening signal is transmitted to the second switch 24, and it opens.

Fig. 5 shows the examples of the measured parameters I, V₂, E₂ for a case of the first switch 22 not being intact. The top graph in Fig. 5 shows the progression of the measured current I over time. The middle graph in Fig. 5 shows the progression over time of the first switch voltage V₁ measured over the first switch 22 and the progression over time of the second switch voltage V₂ measured over the second switch 24. The lower graph in Fig. 5 shows the progression over time of the first switch arc energy E₁ measured at the first switch 22 and the progression over time of the second switch arc energy E₂ measured at the second switch 24. The vertical dashed lines again mark the two times t₁ and t₂. At time t₁, the first opening signal is sent to the first switch 22, but it does not open as it is not intact. At time t₂ = t₁ + t_{delay}, the second opening signal is sent to the second switch 24, and it opens.

The top graph in Fig. 4 shows that the current I drops to zero after the intact first switch 22 is opened at time t₁, even before the second switch 24 is opened at time t₂. The situation is different in Fig. 5, the top graph of which shows how the current I first drops after the first opening signal is sent to the first switch 22 at time t₁, but then rises again because the first switch 22 is not or no longer intact and does not or at least not completely interrupt the power supply. The point of the curve of the current I where the first switch 22 fails is indicated by the vertical arrow. The current I only drops to zero after the intact second switch 24 opens at time t₂.

Therefore, the current I is one of the measured parameters which may be used for determining whether the first switch 22 is intact or not. In particular, when the current I drops to zero, or at least under a predefined threshold, after opening the first switch 22 and before opening the second switch 24, the first switch 22 may be determined as being intact. In contrast, when the current I does not drop to zero, or does not drop under the predefined threshold, after opening the first switch 22 and before opening the second switch 24, the first switch 22 may be determined as not being intact. So, the current I may represent one of the first measured parameters mentioned above.

In the middle graph of Fig. 4, the first switch voltage V₁ increases after the intact first switch 22 opens at time t₁, and the second switch voltage V₂ also increases after the second switch 24 opens at time t₂. This is not the case in Fig. 5, whose middle graph shows how the first switch voltage V₁ initially rises after the first opening signal is sent to the first switch 22 at time t₁, but then drops to zero again because the non-intact first switch 22 is unable to interrupt the power supply. The point of the curve of the first switch voltage V₁ where the first switch 22 fails is indicated by the vertical arrow. The second switch voltage V₂ and, with a time delay, the first switch voltage V₁ only rise after the intact second switch 24 opens at time t₂.

Therefore, the first and second switch voltages V₁, V₂ are some of the measured parameters which may be used for determining whether the first switch 22 is intact or not. In particular, the first switch voltage V₁ may be used for determining whether the first switch 22 is intact or not before or after opening the second switch 24. For example, when the first switch voltage V₁ does not exceed a predefined threshold before or after opening the second switch 24, the first switch 22 may be determined as being not intact. Alternatively or additionally, the second switch voltage V₂ may be used for determining whether the first switch 22 is intact or not after opening the second switch 24. For example, when the second switch voltage V₂ does exceed a predefined threshold after opening the second switch 24, the first switch 22 may be determined as being not intact. So, the first switch voltage V₁ may represent one of the first or second measured parameters mentioned above, and the second switch voltage V₂ may be one of the second measured parameters mentioned above.

The lower graph in Fig. 4 shows that the first switch arc energy E₁ increases after opening the intact first switch 22 at time t₁ and that the second switch arc energy E₂ remains at zero after opening the second switch 24 at time t₂, as no arc is formed at all at the second switch 24 due to the power supply having been successfully interrupted by the first switch 22. This is not the case in Fig. 5, whose lower graph shows how the first switch arc energy E₁ increases after the first opening signal is transmitted at time t₁. However, the second switch arc energy E₂ also increases after the second switch 24 opens at time t₂, as the non-intact first switch 22 does not interrupt the power supply, or at least not completely, and therefore an arc with the correspondingly high second switch arc energy E₂ is formed at the second switch 24 as well. The point of the curve of the first switch arc energy E₁ where the first switch 22 fails is indicated by the vertical arrow.

Therefore, the second switch arc energy E₂ is one of the measured parameters which may be used for determining whether the first switch 22 is intact or not. In particular, the second switch arc energy E₂ may be used for determining whether the first switch 22 is intact or not after opening the second switch 24. For example, when the second switch arc energy E₂ does exceed a predefined threshold after opening the second switch 24, the first switch 22 may be determined as being not intact. So, the second switch arc energy E₂ may be one of the second measured parameters mentioned above.

Another parameter for determining whether the first switch 22 is intact or not may be a temperature. As discussed above, the switch arc energy may lead to a local heating of the contacts of the switch and the switch itself, which may indicate that the corresponding switch is no longer intact.

While the invention has been illustrated and described in detail in the drawings and foregoing description, such illustration and description are to be considered illustrative or exemplary and not restrictive; the invention is not limited to the disclosed embodiments. Other variations to the disclosed embodiments can be understood and effected by those skilled in the art and practising the claimed invention, from a study of the drawings, the disclosure, and the appended claims.

In the claims, the word "comprising" does not exclude other elements or steps, and the indefinite article "a" or "an" does not exclude a plurality. A single processor or controller or other unit may fulfil the functions of several items recited in the claims. The mere fact that certain measures are recited in mutually different dependent claims does not indicate that a combination of these measures cannot be used to advantage. Any reference signs in the claims should not be construed as limiting the scope.

### LIST OF REFERENCE SYMBOLS

- 20: switch system
- 22: first switch
- 24: second switch
- 26: controller
- 27: processing device
- 28: amperemeter
- 30: power source
- 30ₗ: first battery module
- 30ₘ: m^{th} battery module
- 32: terminal
- 34: first pole
- 36: second pole
- 38: fuse
- S1 to S20: method steps one to twenty
- I: current
- V₁: first switch voltage
- V₂: second switch voltage
- E₁: first switch arc energy
- E₂: second switch arc energy

## Claims

1. Method for operating a power supply arrangement (10), the power supply arrangement (10) being configured for supplying energy to an external device and having a power source (30), a first switch (22), a second switch (24), and a terminal (32) for coupling the power source (30) to the external device, the first switch (22) and the second switch (24) being electrically coupled in series such that the power source (30) is electrically coupled to the terminal (32) via the first switch (22) and the second switch (24) when the first switch (22) and the second switch (24) are closed and such that the power source (30) is not electrically coupled to the terminal (32) when at least one of the first switch (22) or the second switch (24) is open, wherein the method comprises:
transmitting a first opening signal to the first switch (22), wherein the first switch (22) and the first opening signal are configured such that the first switch (22) opens upon receipt of the first opening signal;
receiving a first measured parameter (I, V₁, V₂, E₂) after transmitting the first opening signal;
determining from the first measured parameter (I, V₁, V₂, E₂) whether the first switch (22) is intact;
initiating a safety measure when it is determined that the first switch (22) is not intact; and
transmitting a second opening signal to the second switch (24) after transmitting the first opening signal, wherein the second switch (24) and the second opening signal are configured such that the second switch (22) opens upon receipt of the second opening signal.

2. Method according to claim 1, wherein the method further comprises, after transmitting the second opening signal to the second switch (24), receiving a second measured parameter (I, V₁, V₂, E₂) and determining based on it whether the first switch (22) is intact.

3. Method according to claim 1 or 2, wherein the method further comprises, before transmitting the first opening signal to the first switch (22), receiving a third measured parameter (I, V₁, V₂, E₂) and determining based on it whether the first switch (22) is intact.

4. Method according to any one of the preceding claims, wherein the power supply arrangement (10) comprises one or more further switches, wherein the one or more further switches are electrically coupled in series with the first switch (22), the second switch (24) and the power source (30), wherein the power source (26) is further electrically coupled to the terminal (32) via the one or more further switches when the first switch (22), the second switch (24) and the one or more further switches are closed and wherein the power source (26) is not electrically coupled to the terminal (32) when at least one of the first switch (22), the second switch (24) or one of the one or more further switches is open and
wherein the method further comprises, simultaneously with or time-delayed after transmitting the second opening signal, transmitting a respective further opening signal to each of the one or more further switches, wherein the one or more further switches and the respective further opening signals are configured such that each of the one or more further switches opens upon receipt of the respective further opening signal.

5. Method according to any one of the preceding claims, wherein the safety measure comprises at least one of limiting or blocking the operation of the first switch (22) and/or the power supply arrangement (10).

6. Controller (26) for operating a power supply arrangement (10), the power supply arrangement (10) being configured for supplying energy to an external device and having a power source (30), a first switch (22), a second switch (24), and a terminal (32) for coupling the power source (30) to the external device, the first switch (22) and the second switch (24) being electrically coupled in series such that the power source (30) is electrically coupled to the terminal (32) via the first switch (22) and the second switch (24) when the first switch (22) and the second switch (24) are closed and such that the power source (30) is not electrically coupled to the terminal (32) when at least one of the first switch (22) or the second switch (24) is open, the controller (26) comprising:
a memory for storing one or more measurement values (I, V₂, V₂, E₂); and
a processor (27) communicatively coupled with the memory and being configured to carry out the method according to one of the preceding claims based on the one or more measurement values (I, V₂, V₂, E₂) stored in the memory.

7. Power supply arrangement (10) configured for supplying energy to an external device and comprising:
a power source (30);
a terminal (32) for electrically coupling the power source (30) to the external device;
a first switch (22) electrically coupled in series with the power source (30) and being configured for opening upon receipt of a first opening signal,
a second switch (24) electrically coupled in series with the first switch (22) and the power source (30), and being configured for opening upon receipt of a second opening signal;
one or more measuring units (28) for measuring parameters (I, V₁, E₁, V₂, E₂), and
a controller (26) according to claim 6 configured to communicate with the first switch (22), the second switch (24) and the one or more measuring units (28),
wherein
the power source (30) is electrically coupled to the terminal (32) via the first switch (22) and the second switch (24) when the first switch (22) and the second switch (24) are closed and the power source (30) is not electrically coupled to the terminal (32) when at least one of the first switch (22) or the second switch (24) is open.

8. Power supply arrangement (10) according to claim 7, wherein the first switch (22) is a different type of switch than the second switch (24).

9. Power supply arrangement (10) according to claim 8, wherein the first switch (22) is an open or air-filled switch and the second switch (24) is a sealed or gas-filled switch.

10. Power supply arrangement (10) according to any one of the preceding claims 7 to 9, wherein the first switch (22) and the second switch (24), are arranged between a first pole (34) and a second pole (36) of the terminal (32) in such a way that, in a direction of a current flowing from the first pole (34) to the second pole (36), the power source (30) is coupled between the first switch (22) and the second switch (24).

11. Power supply arrangement (10) according to one of the preceding claims 7 to 9, wherein the first switch (22) and the second switch (24) are arranged between a first pole (34) and a second pole (36) of the terminal (32) in such a way that, in a direction of a current flowing from the first pole (34) to the second pole (36), the power source (30) is coupled before or after the two switches (22, 24).

12. Power supply arrangement (10) according to one of the preceding claims 7 to 11, further comprising
one or more further switches, wherein the one or more further switches are electrically coupled in series with the first switch (22), the second switch (24) and the power source (30), wherein the power source (30) is further electrically coupled to the terminal (32) via the one or more further switches when the first switch (22), the second switch (24) and the one or more further switches are closed and wherein the power source (30) is not electrically coupled to the terminal (32) when at least one of the first switch (22), the second switch (24) or one of the one or more further switches is open and wherein
the controller (26) is configured to transmit (44) a respective further opening signal to each of the one or more further switches, wherein the one or more further switches and the respective further opening signals are configured such that each of the one or more further switches opens upon receipt of the respective further opening signal, wherein the respective further opening signal is transmitted (50, 56) simultaneously with or time-delayed after transmitting (50, 56) the second opening signal.

13. Computer program product comprising instructions to cause the controller (26) of claim 6 to carry out the method of any of claims 1 to 5.

14. A computer-readable medium having stored thereon the computer program of claim 13.
